Europäisches Patentamt

European Patent Office

Office européen des brevets

(19)

(11) Numéro de publication : **0 508 897 B1**

(12) **FASCICULE DE BREVET EUROPEEN**

(45) Date de publication du fascicule du brevet :
27.12.95 Bulletin 95/52

(51) Int. Cl.⁶ : **H04N 5/232**

(21) Numéro de dépôt : **92400998.8**

(22) Date de dépôt : **09.04.92**

(54) **Procédé et système pour la mise au point automatique d'une caméra utilisant la TCD**

(30) Priorité : **11.04.91 FR 9104420**

(43) Date de publication de la demande :
**14.10.92 Bulletin 92/42**

(45) Mention de la délivrance du brevet :
**27.12.95 Bulletin 95/52**

(84) Etats contractants désignés :
**DE GB NL**

(56) Documents cités :
**EP-A- 0 290 802**
**US-A- 4 814 889**

(73) Titulaire : **Etablissement Public Télédiffusion de France**
**10, rue d'Oradour-sur-Glane**
**F-75015 Paris (FR)**

(72) Inventeur : **Baina, Jamal**
**16 rue du Docteur Bernheim**
**F-54000 Nancy (FR)**

(74) Mandataire : **Rodhain, Claude et al**
**Cabinet Claude Rodhain S.A.**
**3, rue Moncey**
**F-75009 Paris (FR)**

EP 0 508 897 B1

## Description

L'invention concerne un procédé pour la mise au point automatique (autofocalisation) d'un dispositif de formation d'images, le dispositif de formation d'images comportant une optique à focale variable commandée par un signal de commande pour former une image d'une scène observée et des moyens pour fournir un signal numérique représentatif de l'image formée qui a une définition dépendant de la focale de l'optique.

Jusqu'à présent, pour faire automatiquement la mise au point d'un dispositif de formation d'images ayant une optique à focale variable comme indiqué précédemment, tel qu'une caméra vidéo à tube, une caméra à capteur à semi-conducteurs ou analogue, on mesure la distance entre un objet de la scène observée et l'écran image de la caméra grâce à un système de visée télémétrique par infrarouge, ultrason ou autre et on asservit le signal de commande à partir du résultat de cette mesure pour faire varier la focale de l'optique de la caméra afin d'obtenir une image nette de l'objet, c'est-à-dire pour amener l'image de l'objet observé au niveau du plan de l'écran de la caméra. Les systèmes de visée télémétrique pour les caméras vidéo ou analogues ont été perfectionnés de manière que l'asservissement du signal de commande prenne en compte le résultat de plusieurs visées télémétriques se rapportant à des points différents de l'image.

Ces caméras à mise au point automatique sont utilisées couramment dans les systèmes de vision par ordinateur qui trouvent de nombreuses applications notamment dans la robotique industrielle, mais aussi dans la télésurveillance, la vidéoconférence ou dans le domaine biomédical, pour lesquelles il est nécessaire souvent de pouvoir effectuer automatiquement une scrutation de l'image en ayant la meilleure définition possible de celle-ci. Par ailleurs, dans ces systèmes de vision par ordinateur, il est utile de pouvoir focaliser, automatiquement ou par commande, sur une partie de l'image sans déplacer l'axe de prise de vue pour mettre plus en évidence cette partie de l'image et fournir des données d'information utiles au processus de traitement de l'image du système de vision par ordinateur.

Les caméras connues à mise au point automatique ne permettent pas de telles fonctionnalités du fait que la visée télémétrique est, soit affectée à une zone fixe de l'image, soit dans le cas contraire extrêmement complexe à mettre en oeuvre et donc coûteuse.

On connaît par ailleurs des antériorités US-A- 4 814 889 (GEC) et EP-A- 290 802 (POLAROID) des systèmes de focalisation automatiques ne mettant pas en oeuvre une visée télémétrique. Selon le brevet US-A- 4 814 889, le calcul de la focalisation n'est obtenu qu'indirectement en sommant la luminance, et cette obtention indirecte oblige à un traitement pour augmenter le contraste. Ce traitement met en oeuvre un filtrage qui entraîne une perte d'informations. Ce procédé ne convient qu'à certains types d'images présentant de forts contrastes (par exemple bandes alternées) et en outre les calculs sont compliqués. Selon la demande européenne EP-A- 290 802, la focalisation est détectée en sommant les carrés de la différence entre pixels adjacents de l'image. Ceci implique également un grand nombre de calculs.

Un objectif de l'invention est de proposer un procédé pour la mise au point automatique d'un dispositif de formation d'images, destiné à être utilisé dans un système de vision par ordinateur, qui tire partie des fonctionnalités des équipements constituant le système de vision par ordinateur.

Un autre objectif de l'invention est de proposer un procédé pour la mise au point automatique d'un dispositif de formation d'images qui soit simple à mettre en oeuvre, peu coûteuse et souple d'utilisation.

Le procédé selon l'invention pour la mise au point automatique d'un dispositif de formation d'images, le dispositif de formation d'images comportant une optique à focale variable commandée par un signal de commande pour former une image d'une scène observée et des moyens pour fournir des données numériques représentatives d'une image formée qui a une définition dépendant de la focale de l'optique, est remarquable en ce qu'on asservit le signal de commande de l'optique du dispositif de formation d'images à partir d'un signal numérique représentatif de l'image pour obtenir la définition maximale de l'image, ledit signal numérique étant généré par transformation desdites données numériques d'image qui sont transformées, par une transformée en cosinus discrète, en coefficients représentatifs de fréquences spatiales de l'image.

Alors que dans l'art antérieur précité, les calculs sont réalisés dans l'espace des pixels, selon l'invention au contraire, ils sont réalisés dans l'espace fréquentiel. L'idée de base de l'invention est que les coefficients fréquentiels d'une transformée en cosinus sont plus bas lorsque l'image est défocalisée. Selon un mode préférentiel, on atteint directement une valeur caractéristique de la focalisation en sommant les coefficients de la transformée en cosinus discrète (TCD) pour au moins une zone de l'image, d'où peu de calculs.

Avantageusement, le procédé comporte les étapes de :

grouper les données numériques d'image pour former des blocs de données numériques représentatifs d'une zone de l'image;

- transformer chaque bloc de données numériques en un bloc de coefficients de transformée en cosinus discrète;
- calculer pour chaque bloc de coefficients un paramètre as d'activité locale de l'image selon la relation

suivante:

$$as = \left[\sum_{u=0}^{N-1} \sum_{v=0}^{N-1} F^2{}_{u,v}\right] - F^2{}_{0,0}$$

où $F_{u,v}$ est un coefficient dans le bloc de coefficients,

u,v sont les indices du coefficient dans le bloc de coefficients,

N est une dimension du bloc de coefficients;

- calculer un paramètre AS d'activité globale de l'image à partir des paramètres as d'activité locale de l'image selon la relation suivante:

$$AS = \sum_{x=0}^{L-1} \sum_{y=0}^{M-1} as_{x,y}$$

où x,y sont les indices des paramètres as affectés aux blocs de coefficients,

L,M sont les dimensions en nombre de blocs de données numériques d'image de la zone de l'image;

et asservir le signal de commande pour obtenir la valeur maximale du paramètre AS d'activité globale de l'image.

L'invention s'étend à un système de vision comprenant une caméra vidéo ayant une optique à focale variable commandée par un signal de commande pour fournir un signal vidéo représentatif d'une image ayant une définition dépendant de la focale de l'optique, un moyen de numérisation du signal vidéo relié à la caméra vidéo pour fournir des données numériques d'image, un moyen de traitement des données numériques d'image relié au moyen de numérisation, et un moyen d'asservissement du signal de commande pour faire varier la focale de l'optique, caractérisé en ce que le moyen d'asservissement du signal de commande comprend un moyen de calcul relié au moyen de numérisation pour transformer les données numériques d'image en coefficients de transformée en cosinus discrète et un moyen de calcul et de commande relié au premier moyen de calcul pour asservir le signal de commande en réponse aux valeurs de dits coefficients de manière à obtenir automatiquement la définition maximale de l'image.

Avantageusement, le moyen de calcul et de commande est interposé entre le moyen de numérisation et le moyen de calcul et transmet au moyen de calcul les données numériques d'image représentatives d'une zone de l'image en réponse à une information de zone d'image, le moyen de calcul et de commande étant agencé pour asservir le signal de commande jusqu'à ce que ladite zone d'image présente une définition maximale. Le moyen de calcul et de commande est adapté pour sommer au moins certains desdits coefficients pris tous positivement.

Ces caractéristiques et avantages de l'invention ainsi que d'autres seront encore mieux compris à la lecture de la description détaillée qui suit, d'un exemple de réalisation de l'invention, faite en référence au dessins annexés dans lesquels:

la figure 1 représentant schématiquement un système de vision par ordinateur selon l'invention ;

la figure 2 illustre le principe de la méthode selon l'invention.

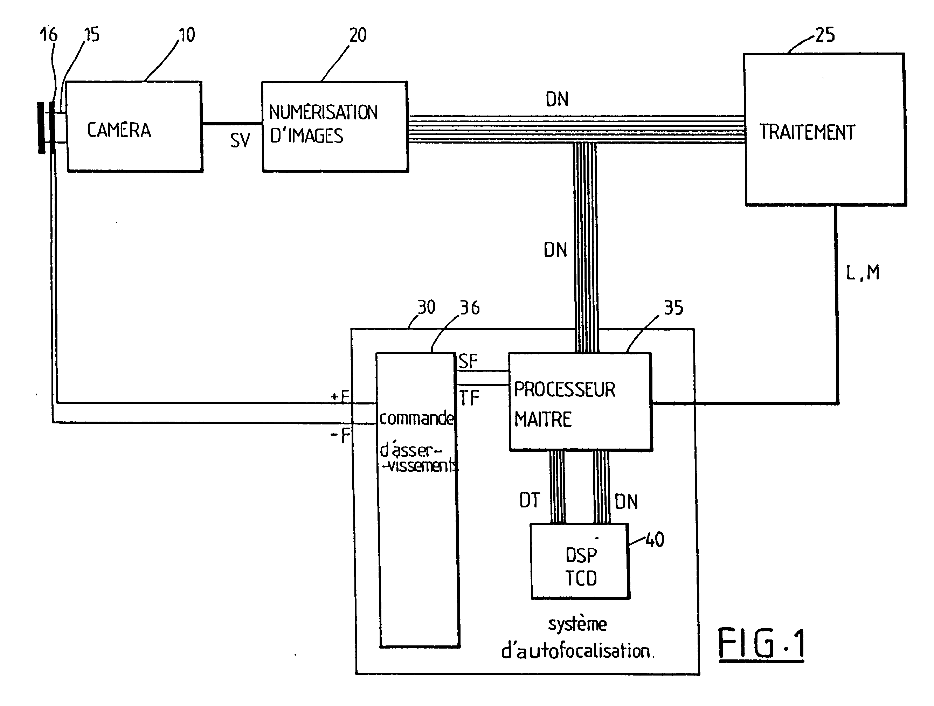

En se reportant à la figure 1, le système de vision par ordinateur comprend un dispositif de formation d'images 10, par exemple une caméra vidéo, qui fournit un signal vidéo SV représentatif d'une image formée, un circuit de numérisation tel que 20 relié à la sortie de la caméra vidéo pour numériser le signal vidéo et fournir des données numériques d'image DN (pixels), un ensemble de traitement 25, tel qu'un ordinateur, relié au circuit de numérisation pour réaliser des opérations de traitement sur les données numériques d'image et un circuit d'asservissement tel que 30 pour faire automatiquement la mise au point de la caméra vidéo. Les opérations de traitement sont liées à une application particulière : télésurveillance, robotique industrielle ou autre.

On devra comprendre que le dispositif de formation d'image peut tout aussi bien être un capteur à semi-conducteurs fournissant en sortie directement des données numériques d'image DN sans sortir du cadre de l'invention.

Le dispositif de formation d'images comprend une optique à focale variable telle que 15 munie d'un moteur 16 pour déplacer les éléments de l'optique en réponse à un signal électrique de commande fourni par le circuit d'asservissement 30 afin d'obtenir automatiquement une image nette. Ce signal électrique de commande est représenté par les symboles +F,-F qui sont par exemple des tensions électriques appliquées sélectivement aux bornes du moteur 16, l'application de ces tensions, respectivement, ayant pour résultat le déplacement, dans un sens ou dans l'autre suivant la tension appliquée du foyer de convergence de l'optique par rapport au plan de l'écran du dispositif de formation d'image.

Le circuit d'asservissement 30 comprend un processeur câblé 40, connu en soi, recevant en entrée les données numériques d'image DN pour réaliser en temps réel une transformation en cosinus discrète (TCD) sur ceux-ci et fournir en sortie des coefficients de transformée en cosinus discrète DT. Les coefficients TCD sont fournis à une unité de traitement et de calcul 35 pour déterminer, comme décrit par la suite, l'activité spatiale de l'image formée correspondant aux coefficients TCD et par conséquent aux données numériques d'image. En réponse aux coefficients TCD, l'unité de calcul et de traitement 35 fournit un signal de signe SF et un signal de temporisation TF à une commande d'asservissement 36 qui engendre l'un des signaux de commande +F,-F en fonction du signal de signe et pendant la durée indiquée par le signal de temporisation, pour que la caméra 10 forme une image avec une définition optimale.

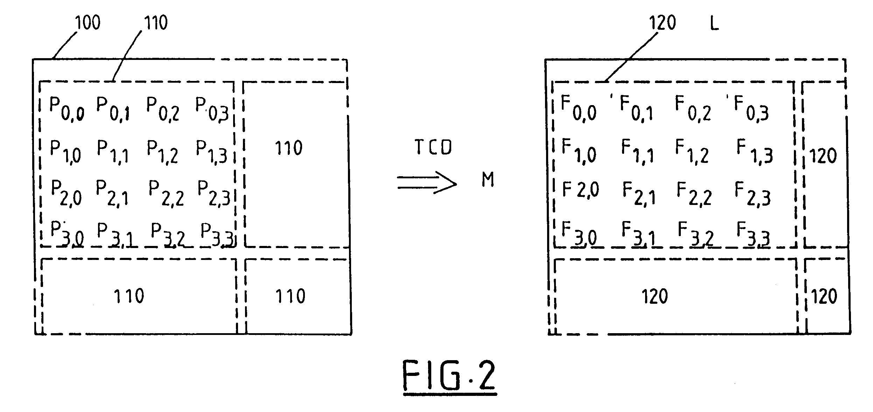

Plus spécifiquement, les données numériques (valeur de luminance de chaque pixel) $P_{1,1}$, $P_{1,2}$ ...d'une image numérisée 100 formée par la caméra 10 sont groupées pour former des blocs 110 contigus de NxN données numériques d'image. Sur la figure 2, N est égal à 4. Les blocs 110 de données numériques d'image sont transformés par une transformation en cosinus discrète (TCD) en blocs 120 de coefficients $F_{1,1}$, $F_{1,2}$ ... assimilables à des fréquences spatiales de l'image selon la relation suivante connue en soi:

$$F_{u,v} = \frac{4}{N^2} \cdot C_u \cdot C_v \sum_{x=0}^{N-1} \sum_{y=0}^{N-1} P_{x,y} \cos\frac{(2x+1)\sqrt{\pi}}{2N} \cos\frac{(2y+1)\sqrt{\pi}}{2N}$$

$$F_{o,o} = \frac{4}{N^2} \cdot \frac{1}{2} \cdot \sum_{x=0}^{N-1} \sum_{y=0}^{N-1} P_{x,y}$$

où
$C_u = C_v = 1/\sqrt{2}$; u ou v = 0
$C_u = C_v = 1$; u = 1, ..., N-1
$F_{u,v}$ est le coefficient transformé TCD dans le bloc 120
$P_{x,y}$ est la valeur de la luminance d'un pixel dans le bloc 110
u,v sont les indices du coefficient TCD dans le bloc 120
x,y sont les indices du pixel dans le bloc 110

On considère, selon l'invention, que l'activité spatiale dans un bloc 110 d'éléments numériques d'image traduit l'existence de nombreuses variations des valeurs de luminance des pixels correspondant au bloc 110. Vu, maintenant dans le domaine transformé, un bloc 110 d'éléments numériques d'image très actif spatialement aura une représentation fréquentielle conséquente et les coefficients TCD qui lui correspondent dans un bloc 120 seront importants en valeur absolue.

Le procédé selon l'invention met en oeuvre un comptage (sommation) des coefficients (à l'exception de la composante continue $F_{0,0}$), pris tous positivement pour asservir le signal de commande jusqu'à obtenir la définition optimale de l'image formée par la caméra 10.

Pour cela et selon un mode de réalisation préféré, on calcule pour chaque bloc 120 de coefficients TCD un paramètre as d'activité locale représentatif du contraste d'une partie de l'image de l'image selon la relation suivante (somme des carrés des coefficients à laquelle on retranche le carré de la composante continue) :

$$\text{as} = \left[ \sum_{u=0}^{N-1} \sum_{v=0}^{N-1} F^2_{u,v} \right] - F^2_{0,0}$$

On calcule ensuite un paramètre AS d'activité globale de l'image à partir des paramètres as d'activité locale de l'image précédemment calculés pour tous les blocs 120 formés selon la relation suivante:

$$AS = \sum_{x=0}^{L-1} \sum_{y=0}^{M-1} as_{x,y}$$

où x,y sont ici les indices des paramètres as affectés aux blocs de coefficients,

L,M sont les dimensions en nombre de blocs de données numériques d'image de la zone de l'image sur laquelle on désire focaliser, c'est-à-dire faire la mise au point;

Enfin, on asservit le signal de commande pour obtenir la valeur maximale du paramètre AS d'activité globale de l'image, c'est-à-dire que l'unité de calcul et de traitement 35 engendre des signaux SF et TF après chaque prise d'une image et un traitement des coefficients TCD comme décrit précédemment de façon à faire converger le paramètre AS, au cours des prises d'image successives pour des focales différentes, jusqu'à une valeur maximale. Le processus d'obtention de la valeur maximale du paramètre AS est de préférence mis en oeuvre par programme.

En se reportant de nouveau à la figure 1, l'unité de calcul et de commande 35 est montrée interposée entre le circuit de numérisation 20 et le processeur de calcul de TCD 40. L'unité de calcul et de commande 35, qui peut être l'ordinateur constituant l'unité de traitement 25, reçoit en entrée les valeurs L,M qui définissent une zone de l'image à focaliser. Ces valeurs L,M peuvent être fournies automatiquement par l'unité de traitement 25 ou par un opérateur via un clavier d'entrée de données (non représenté). En réponse aux valeurs L,M, l'unité de calcul et de commande 35 détermine les blocs 110 de données numériques à fournir au processeur de calcul de TCD 40 pour être transformées en blocs 120 de coefficients TCD. En réponse au coefficient TCD, l'unité de calcul et de commande 35 détermine un paramètre AS d'activité globale de la zone d'image sélectionnée et asservit, par le commande d'asservissement 36, le signal de commande pour que le paramètre AS converge vers une valeur maximale correspondant à une définition optimale de la zone d'image sélectionnée.

Il faut noter que les valeurs L, M peuvent définir l'image complète ou une petite partie de celle-ci.

Ainsi, la mise au point se fait automatiquement sur l'image complète formée par la caméra ou sur une partie de celle-ci. Par ailleurs la méthode pour la mise au point automatique d'une caméra à focale variable commandable fait appel uniquement à des moyens électroniques, processeurs de calcul, qui sont d'une utilisation courante dans les systèmes de codage d'images et qui sont peu coûteux. On pourra avantageusement concevoir, notamment pour des applications de télésurveillance, des algorithmes de scrutation automatique d'images permettant la mise au point de l'optique de la caméra successivement sur différentes zones des images. La sélection interactive de la zone d'image à focaliser trouve un intérêt dans les applications de vidéoconférence.

Bien entendu, l'invention n'est pas limitée à l'exemple de réalisation ci-dessus décrit et on pourra prévoir d'autres variantes sans pour cela sortir du cadre de l'invention.

**Revendications**

1. Procédé de mise au point automatique d'un dispositif de formation d'images (10), le dispositif de formation d'images comportant une optique (15) à focale variable commandée par un signal de commande pour former une image d'une scène observée et des moyens (20) pour fournir des données numériques (DN) représentatives d'une image formée qui a une définition dépendant de la focale de l'optique, dans lequel on asservit le signal de commande de l'optique du dispositif de formation d'images à partir d'un signal numérique représentatif de l'image pour obtenir la définition maximale de l'image, caractérisé en ce que ledit signal numérique est généré par transformation desdites données numériques d'image qui sont transformées, par une transformée en cosinus discrète (TCD), en coefficients représentatifs de fréquences spatiales de l'image.

2. Procédé selon la revendication 1, caractérisé en ce qu'il met en oeuvre un comptage des coefficients pris positivement.

3. Procédé selon une des revendications 1 ou 2, caractérisé en ce qu'il comporte les étapes suivantes :
   - grouper les données numériques d'image pour former des blocs (110) de données numériques représentatifs d'une zone de l'image;
   - transformer chaque bloc de données numériques en un bloc (120) de coefficients de transformée en cosinus discrète;
   - calculer pour chaque bloc de coefficients un paramètre as d'activité locale de l'image selon la relation

suivante:

$$as = \left[\sum_{u=0}^{N-1} \sum_{v=0}^{N-1} F^2{}_{u,v}\right] - F^2{}_{0,0}$$

où Fu,v est un coefficient dans le bloc de coefficients,
u,v sont les indices du coefficient dans le bloc de coefficients,
N est une dimension du bloc de coefficients;
- calculer un paramètre AS d'activité globale de l'image à partir des paramètres as d'activité locale de l'image selon la relation suivante:

$$AS = \sum_{x=0}^{L-1} \sum_{y=0}^{M-1} as_{x,y}$$

où x,y sont les indices des paramètres as affectés aux blocs de coefficients,
L,M sont les dimensions en nombre de blocs de données numériques d'image de la zone de l'image;
- et asservir le signal de commande pour obtenir la valeur maximale du paramètre AS d'activité globale de l'image.

4. Système de vision comprenant une caméra vidéo (10) ayant une optique (15) à focale variable commandée par un signal de commande pour fournir un signal vidéo représentatif d'une image ayant une définition dépendant de la focale de l'optique, un moyen de numérisation (20) du signal vidéo relié à la caméra vidéo pour fournir des données numériques d'image, un moyen de traitement (25) des données numériques d'image relié au moyen de numérisation, et un moyen d'asservissement (30) du signal de commande pour faire varier la focale de l'optique, caractérisé en ce que le moyen d'asservissement du signal de commande comprend un moyen de calcul (40) relié au moyen de numérisation pour transformer les données numériques d'image en coefficients de transformée en cosinus discrète et un moyen de calcul et de commande (35,36) relié au premier moyen de calcul pour asservir le signal de commande en réponse auxdits coefficients de manière à obtenir automatiquement la définition maximale de l'image.

5. Système selon la revendication 4, dans lequel le moyen de calcul et de commande est interposé entre le moyen de numérisation et le moyen de calcul et transmet au moyen de calcul les données numériques d'image représentatives d'une zone de l'image en réponse à une information de zone d'image, le moyen de calcul et de commande étant agencé pour asservir le signal de commande jusqu'à ce que ladite zone d'image présente une définition maximale.

6. Système selon une des revendications 4 ou 5, caractérisé en ce que le moyen de calcul et de commande est adapté pour sommer lesdits coefficients pris tous positivement.

**Patentansprüche**

1. Verfahren zur automatischen Scharfeinstellung in einer Vorrichtung zum Erstellen von Bildern (10), wobei diese Vorrichtung eine Optik (15) mit variabler Brennweite umfaßt, die über ein Befehlssignal gesteuert wird, um eine Abbildung einer beobachteten Szene zu erstellen, sowie Mittel (20) zum Bereitstellen von repräsentativen digitalen Daten (DN) eines erstellten Bildes, dessen Auflösung von der Brennweite der Optik abhängt. Dieses Verfahren, bei dem das Befehlssignal der Abbildungsvorrichtungsoptik, ausgehend von einem für das Bild repräsentativen digitalen Signal, so gesteuert wird, das man die höchste Bildauflösung erhält, ist
dadurch gekennzeichnet, daß das digitale Signal durch Transformation der digitalen Bilddaten erzeugt wird, welche durch eine diskrete Kosinustransformierte (TCD) in Koeffizienten umgewandelt wird, die für die Raumfrequenzen des Bildes repräsentativ sind.

6

**EP 0 508 897 B1**

2. Verfahren gemäß Anspruch 1,
dadurch gekennzeichnet, daß es eine Zählung der positiv genommenen Koeffizienten anwendet.

3. Verfahren gemäß Anspruch 1 oder 2,
dadurch gekennzeichnet, daß es die folgenden Schritte umfaßt:
- die digitalen Bilddaten werden zusammengefügt, um digitale Datenblöcke (110) zu bilden, die repräsentativ für einen Bildbereich sind;
- jeder Datenblock wird in einen Block (120) von diskreten Kosinustransformiertenkoeffizienten transformiert;
- für Jeden Koeffizientenblock wird ein Parameter as der örtlichen Bildaktivität gemäß der folgenden Beziehung berechnet:

$$as = [\sum_{u=0}^{N-1} \sum_{v=0}^{N-1} F_{u,v}^2] - F_{0,0}^2$$

wobei $F_{u,v}$ ein Koeffizient aus dem Koeffizientenblock ist,
u,v die Indizes des Koeffizienten im Koeffizientenblock sind,
N eine Dimension des Koeffizientenblocks ist;
- ausgehend von den örtlichen Bildaktivitätsparametern as, wird ein globaler Bildaktivitätparameter AS gemäß der folgenden Beziehung berechnet:

$$AS = \sum_{x=0}^{L-1} \sum_{y=0}^{M-1} as_{x,y}$$

wobei x,y die Indizes der Parameter as sind, die den Koeffizientenblöcken zugeordnet sind,
L,M die Zahlendimensionen der digitalen Bilddatenblöcke des Bildbereichs sind;
- das Befehlssignal wird so gesteuert, das man den maximalen Wert für den Parameter AS der gesamten Bildaktivität erhält.

4. Videosystem, welches eine Videokamera (10) umfaßt, die eine Optik (15) mit variabler Brennweite hat, welche durch ein Befehlssignal gesteuert wird, um ein repräsentatives Videosignal eines Bildes, dessen Auflösung von der Brennweite der Optik abhängt, zu liefern; ferner eine Digitalisierungsvorrichtung (20) für das Videosignal, das mit der Videokamera verbunden ist, um digitale Bilddaten zu liefern; eine Verarbeitungsvorrichtung (25) für die digitalen Bilddaten, die mit der Digitalisierungsvorrichtung verbunden ist, sowie Steuerungsmittel (30) des Befehlssignals, um die Brennweite der Optik zu ändern,
dadurch gekennzeichnet, daß das Steuerungsmittel des Befehlssignals Mittel zur Berechnung (40) umfaßt, die mit der Digitalisierungsvorrichtung verbunden sind, um die digitalen Bilddaten in diskrete Kosinustransformiertenkoeffizienten umzuwandeln sowie eine Berechnungs- und Steuerungsvorrichtung (35, 36), die mit den ersten Mitteln zur Berechnung verbunden ist, um das Befehlssignal in Beantwortung der Koeffizienten zu steuern, damit die höchste Bildauflösung automatisch erzielt wird.

5. Anspruch gemäß Anspruch 4, wobei die Berechnungs- und Steuerungsvorrichtung zwischen der Digitalisierungsvorrichtung und den Mitteln zur Berechnung eingebracht wird und die für einen Bildbereich repräsentativen digitalen Bilddaten als Antwort auf eine Information des Bildbereichs an die Berechnungsmittel überträgt, wobei die Mittel zur Berechnung und zum Steuern so ausgebildet sind, das sie das Befehlssignal steuern, bis der Bildbereich die maximale Auflösung aufweist.

6. System gemäß Anspruch 4 oder 5,
dadurch gekennzeichnet, daß die Mittel zur Berechnung und zur Steuerung so ausgebildet sind, daß sie die Koeffizienten addieren, die alle positiv genommen werden.

**Claims**

1. Method for automatic focussing of an image forming device (10), the image forming device comprising a

7

variable focus lens (15) controlled by a control signal to form an image of an observed scene and means (20) to provide digital data (DN) representative of an image formed which has a definition depending on the focal length of the lens, in which the control signal for the lens of the image forming device is automatically controlled by a digital signal representative of the image in order to obtain the maximum definition of the image, characterised in that the said digital signal is generated by transformation of the said digital image data which are transformed by a discrete cosine transform (DCT) into coefficients representative of spatial frequencies of the image.

2. Method according to claim 1, characterised in that it employs a positively taken coefficient count.

3. Method according to one of claims 1 or 2, characterised in that it comprises the following steps:
   - grouping the digital image data to form blocks (110) of digital data representative of a zone of the image;
   - transforming each block of digital data into a block (120) of discrete cosine transform coefficients;
   - calculating for each block of coefficients a parameter **as** of local activity of the image according to the following formula:

$$as = \sum_{u=0}^{N-1} \sum_{v=0}^{N-1} F^2_{u,v} - F^2_{0,0}$$

where $F_{u,v}$ is a coefficient in the block of coefficients,
u, v are the indices of the coefficient in the block of coefficients,
N is a dimension of the block of coefficients;
   - calculating a parameter **AS** of global activity of the image from the local activity parameters **as** of the image

$$AS = \sum_{x=0}^{L-1} \sum_{y=0}^{M-1} as_{x,y}$$

where x, y are the indices of the parameters **as** allocated to the blocks of coefficients,
L,M are the dimensions in number of blocks of digital image data of the zone of the image;
   - and automatically controlling the control signal to obtain the maximum value of the parameter **AS** of global image activity.

4. Visual system comprising a video camera (10) having a variable focus lens (15) controlled by a control signal to supply a video signal representative of an image having a definition depending on the focal length of the lens, a means (20) for digitising the video signal connected to the video camera to supply digital image data, a means (25) for processing the digital image data connected to the digitising means, and a means (30) for automatic control of the control signal in order to vary the focal length of the lens, characterised in that the means for automatic control of the control signal comprise a calculating means (40) connected to the digitising means to transform the digital image data into discrete cosine transform coefficients and a calculating and control means (35, 36), connected to the first calculating means, for automatic control of the control signal in response to the said coefficients in such a way as to obtain maximum image definition automatically.

5. System according to claim 4, in which the calculating and control means is interposed between the digitising means and the calculating means and transmits to the calculating means the digital image data representative of a zone of the image in response to a datum of the image zone, the calculating and control means being arranged for automatic control of the control signal until the said image zone has a maximum definition.

6. System according to one of claims 4 or 5, characterised in that the calculating and control means are adapted to add the said positively taken coefficients.

FIG·1

16 15 10 20

CAMÉRA | SV | NUMÉRISATION D'IMAGES

DN

TRAITEMENT 25

DN

L,M

30 36 35

SF

+F TF

−F PROCESSEUR MAITRE

commande d'asser--vissements

DT DN

DSP TCD 40

système d'autofocalisation.

EP 0 508 897 B1

## FIG.2